# EUROPÄISCHE PATENTSCHRIFT

(11) **EP 3 748 202 B1**
(45) Veröffentlichungstag und Bekanntmachung des Hinweises auf die Patenterteilung: **11.05.2022**
(21) Anmeldenummer: 19178954.4
(22) Anmeldetag: 07.06.2019
(51) Int. Cl.: F16H 57/04

(54) **VORRICHTUNG ZUM SCHWENKEN ODER SPANNEN EINES BAUTEILS**
DEVICE FOR PIVOTING OR TENSIONING OF A COMPONENT
DISPOSITIF DE PIVOTEMENT OU DE SERRAGE D'UN COMPOSANT

(43) Veröffentlichungstag der Anmeldung: 09.12.2020
(73) Patentinhaber: UNIVER S.p.A., 20128 Milano (IT)
(72) Erfinder: MIGLIORI, Luciano, 20124 Milano (IT)
(74) Vertreter: Franke, Markus

(56) Entgegenhaltungen:
- CN-A- 108 561 543
- DE-A1- 3 719 776
- JP-A- 2005 331 075

## Beschreibung

Die vorliegende Erfindung betrifft eine Vorrichtung zum Schwenken oder Spannen eines Bauteils, insbesondere eines Karosseriebauteils. Die Vorrichtung weist ein Kopfteil auf, wobei das Kopfteil ein Schneckengetriebe aufweist, wobei das Schneckengetriebe eine antreibbare Schnecke mit mindestens einem Schraubengang und ein darin kämmendes Schneckenrad aufweist, wobei mittels des Schneckenrads eine aus dem Kopfteil herausgeführte Ausgangswelle antreibbar ist. Diese Ausgangswelle ist drehfest mit mindestens einem Schwenkelement oder Spannelement verbindbar . Zusätzliche für die Erfindung notwendige technische Merkmale sind im Anspruch 1 zu finden.

Vorzugsweise ist die Schnecke mittels eines Elektromotors antreibbar, insbesondere ist der Elektromotor ein Bestandteil der Vorrichtung.

Vorrichtungen zum Schwenken oder Spannen eines Bauteils finden in vielfältigen Konstruktionen Einsatz im Karosseriebau der Kfz-Industrie. Hierbei kann mit dem mindestens einen Schwenkelement oder dem Spannelement der Vorrichtung ein spezifisches Werkzeug verbunden sein, um insbesondere die Funktion einer Spannvorrichtung, einer Schweißzange, eines Prägewerkzeugs, eines Clinchwerkzeugs oder eines Stiftziehzylinders zu verwirklichen. Je nach Anforderung kann in der Vorrichtung eine Kniehebelfunktion integriert sein, um in einer Übertotpunktstellung des Kniehebels eine sichere Endpositionierung des Werkzeugs, welches mit dem Schwenkelement oder dem Spannelement verbunden ist, zu gewährleisten.

Eine Vorrichtung der eingangs genannten Art, welche als Schwenkvorrichtung ausgebildet ist, ist beispielsweise aus der WO 03/047815 A1 bekannt. Bei dieser ist über einen Elektromotor ein Schneckengetriebe antreibbar. Das Schneckenrad des Schneckengetriebes wirkt mit einer Kniehebelanordnung zusammen, die wiederum mit der aus dem Kopfteil herausgeführten Ausgangswelle zusammenwirkt, die drehfest mit dem Schwenkelement verbunden ist. Durch Drehrichtungsumkehr des Elektromotors lässt sich das Schneckenrad in entgegengesetzte Richtungen drehen und damit das Schwenkelement hin und her verschwenken. Der Elektromotor ist als Wechselstrom- oder Drehstrommotor ausgebildet.

Um einerseits Reibungsverluste zu vermeiden und andererseits den Verschleiß des Schneckengetriebes zu minimieren, sind auf das Schneckenrad und die Schnecke typischerweise Schmiermittel aufgebracht, beispielsweise in Form von einem Fett oder einem Öl.

Da während des Betriebs der Vorrichtung ein, beispielsweise initial, auf die Schnecke und/oder das Schneckenrad aufgebrachtes Schmiermittel im Kontaktbereich zwischen der Schnecke und dem Schneckenrad abgetragen wird, nehmen im Laufe der Zeit die Reibungsverluste und somit der Verschleiß zu, was sich negativ auf das präzise Verschwenken bzw. das präzise Spannen eines Bauteils durch die Vorrichtung auswirkt oder gar zu einer Beschädigung der Vorrichtung führen kann. Aufgrund der Gestaltung einer derartigen Vorrichtung ist ein Nachschmieren der Schnecke und/oder des Schneckenrades mit relativ hohem Aufwand verbunden, da typischerweise zu diesem Zweck das Kopfteil geöffnet werden muss, um Zugang zu der Schnecke und/oder dem Schneckenrad zu erhalten.

Aus der CN 108 561 543 A ist ein Schneckengetriebe mit einer Schmiervorrichtung bekannt. Die JP 2005 331075 A offenbart weiteren Stand der Technik betreffend ein Schneckengetriebe mit Schmiervorrichtung.

Aufgabe der vorliegenden Erfindung ist es daher, eine Vorrichtung der eingangs genannten Art derart weiterzubilden, dass auch bei einem Langzeitbetrieb der Vorrichtung eine ausreichende Schmierung der Schnecke und/oder des Schneckenrades gewährleistet ist. Gelöst wird diese Aufgabe durch eine Vorrichtung, die die Merkmale des Patentanspruchs 1 aufweist.

Bei der erfindungsgemäßen Vorrichtung ist vorgesehen, dass die Vorrichtung eine Schmiervorrichtung aufweist, die dem Schmieren des Schneckengetriebes mit einem Schmiermittel dient. Die Schmiervorrichtung ist dabei in dem Kopfteil gelagert. Die Schmiervorrichtung weist ein eine Kavität umschließendes Gehäuse auf, wobei die Kavität der Aufnahme des Schmiermittels dient. Ferner weist die Schmiervorrichtung zumindest ein Auftragselement auf, wobei zumindest ein Teilbereich des Auftragselements in der Kavität angeordnet ist und wobei das Auftragselement den mindestens einen Schraubengang der Schnecke kontaktiert.

Durch Einbringen von einem Schmiermittel in die Kavität der Schmiervorrichtung ist quasi ein Reservoir mit Schmiermittel gebildet, wobei das Auftragselement aufgrund seiner Anordnung das in der Kavität angeordnete Schmiermittel aufnehmen und auf den mindestens einen Schraubengang der Schnecke auftragen kann, sodass in dem kämmenden Bereich der Schnecke mit dem Schneckenrad durch das Aufbringen von Schmiermittel aus der Kavität auf den Schraubengang der Schnecke mittels des Auftragselements eine ausreichende Schmierung gewährleistet wird.

Durch die Kavität der Schmiervorrichtung, welche durch das Gehäuse der Schmiervorrichtung umschlossen wird, und die Anordnung der Schmiervorrichtung in dem Kopfteil wird sichergestellt, dass nur ein Teilbereich des Innenbereichs des Kopfteils als Reservoir für das Schmiermittel dient. Da nur ein Teilbereich des Innenbereichs als Kavität dient, ist die Menge des Schmiermittels, welche für die ordnungsgemäße Funktion der Schmiervorrichtung in der Kavität benötigt wird, geringer gegenüber eine Vorrichtung bei der der gesamte Innenbereich als Reservoir dient. Durch die Anordnung des Auftragselements wird sichergestellt, dass das Schmiermittel gezielt auf den Bereich aufgetragen wird, in dem eine Schmierung notwendig ist. Dadurch wird der notwendige Bedarf an Schmiermittel bzw. der Verbrauch von Schmiermittel reduziert und zudem vermieden, dass Schmiermittel in Bereiche des Kopfgehäuses bzw. in Bereiche der Vorrichtung gelangt, in denen das Vorhandensein von Schmiermittel unerwünscht ist. Ferner ist das gezielte Aufbringen von Schmiermittel auf den Schraubengang dahingehend als vorteilhaft anzusehen, dass in die Kavität das für den gewünschten Zweck geeignete Schmiermittel eingebracht und somit auf den Schraubengang aufgebracht wird, wohingegen in anderen Bereichen des Kopfteils, welche beispielsweise mit einer anderen Art von Schmiermittel geschmiert werden, diese Schmiermittel nicht durch das für die Schnecke und das Schneckenrad vorgesehene Schmiermittel verdrängt werden oder sich diese unterschiedlichen Schmiermittel vermischen.

Um eine besonders effiziente Auftragung des Schmiermittels auf den Schraubengang zu erreichen, wird es als vorteilhaft angesehen, wenn zumindest ein Teilbereich des mindestens einen Schraubengangs in der Kavität angeordnet ist. Vorzugsweise ist der mindestens eine Schraubengang vollständig in der Kavität angeordnet.

Als besonders vorteilhaft wird es angesehen, wenn die Schnecke die Kavität entlang einer Drehachse der Schnecke durchsetzt, vorzugsweise die Schnecke die Kavität und das Gehäuse der Schmiervorrichtung entlang der Drehachse der Schnecke durchsetzt. Bei einer derartigen Ausführungsform der Vorrichtung ist der Platzbedarf der Schmiervorrichtung in dem Kopfteil reduziert, was sich vorteilhaft auf die Baugröße der Vorrichtung, insbesondere die Baugröße des Kopfteils auswirkt.

Als besonders vorteilhaft wird es angesehen, wenn das Gehäuse der Schmiervorrichtung einen ersten Gehäuseabschnitt und einen zweiten Gehäuseabschnitt aufweist, wobei der erste Gehäuseabschnitt und der zweite Gehäuseabschnitt lösbar miteinander verbindbar sind. Dabei durchsetzt ein erster Abschnitt der Schnecke den ersten Gehäuseabschnitt und ein zweiter Abschnitt der Schnecke den zweiten Gehäuseabschnitt, wobei der mindestens eine Schraubengang zwischen dem ersten Abschnitt und dem zweiten Abschnitt der Schnecke ausgebildet ist. Durch eine derartige Gestaltung der Vorrichtung ist eine besonders einfache Montage der Vorrichtung, insbesondere eine besonders einfache Montage der Schmiervorrichtung möglich. So ist insbesondere vorgesehen, dass bei einer Montage der Vorrichtung zunächst die Schnecke und die beiden Gehäuseabschnitte des Gehäuses der Schmiervorrichtung derart vormontiert werden, dass die Schnecke den ersten Gehäuseabschnitt und den zweiten Gehäuseabschnitt mit dem jeweiligen Abschnitt durchsetzt und dann diese vormontierte Einheit mit den weiteren Komponenten der Vorrichtung verbunden wird.

Es ist vorgesehen, dass das Gehäuse eine in die Kavität mündende Öffnung aufweist, wobei ein Segment des Schneckenrads diese Öffnung durchsetzt. Dies ist hinsichtlich einer effektiven Schmierung als vorteilhaft anzusehen, da der in die Kavität ragende Bereich des Schneckenrades, welcher vorzugsweise mit dem mindestens einen Schraubengang der Schnecke kämmt, ebenfalls unmittelbar mit dem in der Kavität angeordneten Schmiermittel in Kontakt kommen kann, beispielsweise das Auftragselement ebenfalls diesen Bereich des Schneckenrades kontaktiert.

Bei dem die Öffnung durchsetzenden Segment des Schneckenrades handelt es sich vorzugsweise um ein Kreissegment.

Das Schneckenrad ist vorzugsweise als Stirnrad, insbesondere als schräg verzahntes Stirnrad ausgebildet.

Um einen unnötigen Verlust von Schmiermittel und somit eine besonders effiziente Nutzung des Schmiermittels zu gewährleisten, ist vorgesehen, dass die Schmiervorrichtung ein im Bereich der Öffnung angeordnetes Dichtmittel aufweist. Dadurch wird ein unerwünschter Verlust bzw. ein unerwünschtes Austreten von Schmiermittel durch die in Kavität mündende Öffnung vermieden.

Bei dem Dichtmittel handelt es sich insbesondere um eine Dichtlippe.

Es ist durchaus denkbar, dass das Dichtmittel eine Vielzahl von Borsten aufweist, insbesondere die Borsten das Schneckenrad kontaktieren.

Im Zusammenhang mit dem im Bereich der Öffnung angeordneten Dichtmittel ist vorgesehen, dass die Schmiervorrichtung ein im Bereich der Öffnung angeordnetes erstes Dichtmittel aufweist, wobei das erste Dichtmittel das Schneckenrad an einer Umfangfläche des Schneckenrades kontaktiert. Bei dem ersten Dichtmittel handelt es sich insbesondere um ein Dichtmittel mit einer Vielzahl von Borsten. Eine Ausführungsform mit Borsten hat unter anderem den Vorteil, dass zudem der Auftrag von Schmiermittel auf die Umfangfläche des Schneckenrades begünstigt wird, insbesondere bei einem als Stirnrad ausgebildeten Schneckenrad. Zusätzlich oder alternativ kann die Schmiervorrichtung ein im Bereich der Öffnung angeordnetes zweites Dichtmittel aufweisen, wobei das zweite Dichtmittel das Schneckenrad in Richtung einer Drehachse des Schneckenrades kontaktiert.

Durch das erste und/oder das zweite Dichtmittel wird ein Austreten von Schmiermittel aus der Kavität in den das Gehäuse umgebenden Bereich des Kopfteils vermieden, was sich vorteilhaft auf die Betriebsdauer und die notwendigen Wartungsintervalle auswirkt.

Als besonders vorteilhaft hinsichtlich einer besonders guten Abdichtung der Kavität gegenüber der Umgebung wird es angesehen, wenn eine das zweite Dichtmittel kontaktierende Fläche des Schneckenrades als ebene Fläche ausgebildet ist, insbesondere als ebene geschlossene Fläche ausgebildet ist. Insbesondere ist diese Fläche als Ringfläche, besonders bevorzugt als Kreisringfläche ausgebildet.

Um ein Einbringen von Schmiermittel in die Kavität und/oder ein Entnehmen von Schmiermittel aus der Kavität und/oder einen Austausch von Schmiermittel zu ermöglichen, wird es als besonders vorteilhaft angesehen, wenn das Gehäuse eine von außen zugängliche, in die Kavität mündende Zugangsöffnung zum Einbringen des Schmiermittels in die Kavität und/oder zum Entnehmen des Schmiermittels aus der Kavität aufweist. Ein Austausch und/oder ein Nachfüllen von Schmiermittel ist somit besonders einfach möglich.

Die Zugangsöffnung ist vorzugsweise auf einer dem Schneckenrad abgewandten Seite des Gehäuses ausgebildet.

Als besonders vorteilhaft wird es angesehen, wenn die Schmiervorrichtung einen Stutzen umfasst, wobei der Stutzen die Zugangsöffnung umfasst. Der Stutzen ist insbesondere als Schmiernippel ausgebildet. Der Schmiernippel ist insbesondere derart ausgebildet, dass dieser zu einer handelüblichen Fettpresse korrespondiert.

Um einen unerwünschten Verlust von Schmiermittel aus der Zugangsöffnung und/oder einen Eintrag von Schmutz durch die Zugangsöffnung in die Kavität zu vermeiden, wird es als vorteilhaft angesehen, wenn die Zugangsöffnung mittels eines Verschlusses verschließbar ist.

Als besonders vorteilhaft wird es angesehen, wenn der Verschluss mit einem Gehäuse des Kopfteils verbindbar ist, insbesondere der Verschluss in das Gehäuse des Kopfteils einschraubbar ist. Dadurch ist die Verwendung der Zugangsöffnung besonders einfach möglich.

Hinsichtlich eines besonders effizienten Auftrags von Schmiermittel mittels des Auftragselements ist in einer bevorzugten Ausführungsform der Vorrichtung vorgesehen, dass das Auftragselement Borsten aufweist, wobei die Borsten den mindestens einen Schraubengang kontaktieren. Insbesondere ist das Auftragselement als Bürste ausgebildet. Als besonders vorteilhaft wird es angesehen, wenn die Borsten umlaufend um eine zentrale Achse des Auftragselements angeordnet sind.

Hinsichtlich einer besonders effizienten Auftragung des Schmiermittels auf den Schraubengang wird es als vorteilhaft angesehen, wenn ein Bereich des Auftragselements, der den mindestens einen Schraubengang kontaktiert, aus einem Material besteht, das dazu geeignet ist, das Schmiermittel aufzunehmen.

In einer besonders bevorzugten Ausführungsform der Vorrichtung ist vorgesehen, dass es sich bei dem Material um Filz handelt.

In einer bevorzugten Ausführungsform der Vorrichtung ist vorgesehen, dass das Auftragselement eine Schlitzung aufweist, wobei das Auftragselement im Bereich der Schlitzung den mindestens einen Schraubengang kontaktiert. Als besonders vorteilhaft in diesem Zusammenhang wird es angesehen, wenn das Auftragselement im Bereich der Schlitzung den Schraubengang vollflächig kontaktiert.

Um beim Betrieb der Vorrichtung eine besonders effiziente Auftragung des Schmiermittels auf den Schraubengang zu gewährleisten, ist in einer bevorzugten Ausführungsform der Vorrichtung vorgesehen, dass das Auftragselement um eine Drehachse drehbar gelagert ist. Dadurch, dass das Auftragselement drehbar gelagert ist, kann durch eine Drehung des Auftragselements besonders effizient Schmiermittel aus Bereichen der Kavität, welche nicht unmittelbar an den Schraubengang angrenzen, mittels des sich drehenden Auftragselements zu dem Schraubengang hin transportiert und auf den Schraubengang aufgetragen werden, wodurch eine besonders effiziente Schmierung und eine besonders effiziente Nutzung des in der Kavität angeordneten Schmiermittels ermöglicht ist.

Vorzugsweise ist der Drehwinkelbereich, um den eine Drehung des Auftragselements um die Drehachse möglich ist, nicht begrenzt.

Es ist durchaus denkbar, dass die Vorrichtung eine separate Einrichtung zum Drehen des Auftragselements um die Drehachse aufweist.

Vorzugsweise ist allerdings das Auftragselement derart ausgebildet, dass bei einem Drehen der Schnecke aufgrund der Kontaktierung des Auftragselements mit dem Schraubengang der Schnecke das Auftragselement ebenfalls gedreht wird.

Bei dem drehbar gelagerten Auftragselement handelt es sich insbesondere um ein Auftragselement mit umlaufend um die Drehachse angeordneten Borsten.

Vorzugsweise ist die Drehachse des Auftragselements parallel zu der Drehachse der Schnecke ausgebildet.

Vorzugsweise ist das um die Drehachse drehbare Auftragselement als Bürste ausgebildet.

Insbesondere bei einem Auftragselement mit einer Schlitzung wird es als vorteilhaft angesehen, wenn der Drehwinkelbereich beschränkt ist. Ein solche Beschränkung des Drehwinkelbereichs hat sich insbesondere bei einer nicht rotationssymmetrischen Schlitzung als vorteilhaft erwiesen, da sich durch eine Änderung der Winkelstellung die Kontaktierung im Bereich Schlitzung ändert. So ist insbesondere denkbar, dass das Auftragselement bei einer Drehung der Schnecke in der einen Drehrichtung eine erste Winkelstellung einnimmt und bei einer Drehung der Schnecke in die entgegengesetzte Drehrichtung eine zweite Winkelstellung einnimmt, wobei das Auftragselement, insbesondere die Schlitzung, derart gestaltet ist, dass die Kontaktierung der Schnecke in der ersten Winkelstellung unterschiedlich ist zu der Kontaktierung in der zweiten Winkelstellung. Bei dem begrenzt drehbaren Auftragselement handelt es sich insbesondere um ein Auftragselement, das aus Filz besteht oder Filz aufweist.

Es ist aber auch durchaus denkbar, dass das Auftragselement drehfest gelagert ist. Dies wird insbesondere hinsichtlich eines Auftragselements, welches aus Filz besteht oder Filz aufweist, als vorteilhaft angesehen.

Bei dem Schmiermittel kann es sich um ein Öl oder ein Fett handeln. Vorzugsweise handelt es sich bei dem Schmiermittel um ein Fett.

In einer besonders bevorzugten Ausführungsform ist vorgesehen, dass das Auftragselement zwei gegenüberliegend ausgebildete Lagerabschnitte aufweist, wobei der jeweilige Lagerabschnitt in einem korrespondierenden Gegenlagerabschnitt des Gehäuses gelagert ist. Dadurch ist eine besonders einfache Montage des Auftragselements in dem Gehäuse der Schmiervorrichtung möglich. Zudem kann durch diese Gestaltung des Auftragselements und des Gehäuses in besonders einfacher Art und Weise eine Drehbarkeit des Auftragselements verwirklicht werden. Vorzugsweise ist die Schmiervorrichtung vollständig innerhalb des Kopfteils angeordnet bzw. innerhalb eines durch ein Gehäuse des Kopfteils begrenzten Innenraums des Kopfteils angeordnet.

In einer besonders bevorzugten Weiterbildung der Vorrichtung ist vorgesehen, dass die Schmiervorrichtung zumindest zwei Auftragselemente aufweist. Die Verwendung von mindestens zwei Auftragselementen hat sich hinsichtlich eines besonders effizienten Aufbringens des Schmiermittels als vorteilhaft erwiesen, insbesondere bei einer Vorrichtung, bei der die Drehrichtung der Schnecke wechselt, beispielsweise um ein hin und her Verschwenken zu erreichen.

Um eine besonders effiziente Nutzung des in der Kavität angeordneten Schmiermittels zu ermöglichen, kontaktiert das Auftragselement in einer bevorzugten Ausführungsform das Gehäuse auf einer der Kavität zugewandten Seite des Gehäuses. Dies hat sich insbesondere bei einem drehbar gelagerten Auftragselement mit Borsten als vorteilhaft erwiesen, wobei die Borsten das Gehäuse kontaktieren.

In den Figuren ist die Erfindung anhand von bevorzugten Ausführungsbeispielen veranschaulicht, ohne auf die beschriebenen Ausführungsformen beschränkt zu sein. Es zeigen:
- Fig. 1: eine erste Ausführungsform einer Vorrichtung zum Schwenken oder Spannen eines Bauteils mit einer in einem Kopfteil der Vorrichtung angeordneten Schmiervorrichtung zum Schmieren einer Schnecke eines Schneckengetriebes, in einer Ansicht mit einem teilweise geöffneten Kopfteil, in einer perspektivischen Ansicht,
- Fig. 2: einen Teilbereich der Vorrichtung gemäß Fig. 1, in einer ersten perspektivischen Ansicht,
- Fig. 3: der Teilbereich der Vorrichtung gemäß Fig. 2, in einer zweiten perspektivischen Ansicht,
- Fig. 4: ein Teilbereich der Vorrichtung gemäß Fig. 1, in einer perspektivischen Ansicht,
- Fig. 5: der Teilbereich der Vorrichtung gemäß Fig. 2 mit einem vergrößerten Teilbereich, in einer dritten perspektivischen Ansicht,
- Fig. 6: der Teilbereich der Vorrichtung gemäß Fig. 2 mit einem vergrößerten Teilbereich, in einer vierten perspektivischen Ansicht,
- Fig. 7: die Schmiervorrichtung mit darin angeordneter Schnecke, in einer Ansicht gemäß dem Pfeil VII in Fig. 8,
- Fig. 8: die Anordnung gemäß Fig. 7 und ein in der Schnecke kämmendes Schneckenrad, in einer perspektivischen Ansicht, wobei ein Teilbereich transparent dargestellt ist,
- Fig. 9: ein Teilbereich der Anordnung gemäß Fig. 7, in einer Ansicht gemäß dem Pfeil IX in Fig. 7,
- Fig. 10: die Anordnung gemäß Fig. 7, in einer Explosionsdarstellung,
- Fig. 11: ein als Bürste ausgebildetes Auftragselement der Schmiervorrichtung gemäß Fig. 7, in einer perspektivischen Darstellung,
- Fig. 12: einen Teilbereich einer zweiten Ausführungsform der Vorrichtung, in einer Explosionsdarstellung,
- Fig. 13: einen Teilbereich der Anordnung gemäß Fig. 12, in einer Seitenansicht,
- Fig. 14: ein Auftragselement der Anordnung gemäß Fig. 12, ein einer perspektivischen Ansicht,
- Fig. 15: einen Teilbereich einer dritten Ausführungsform der Vorrichtung, in einer Seitenansicht,
- Fig. 16: Ein Teilbereich der Anordnung gemäß Fig. 8, in einer perspektivischen Ansicht,
- Fig. 17: die Vorrichtung zum Schwenken oder Spannen eines Bauteils, in einer perspektivischen Ansicht.

### Figurenbeschreibung

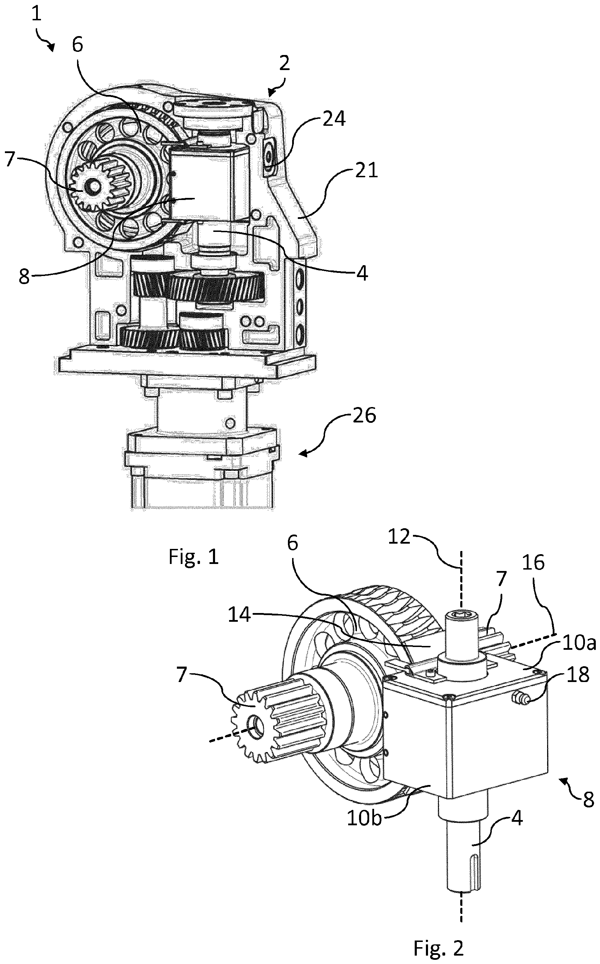

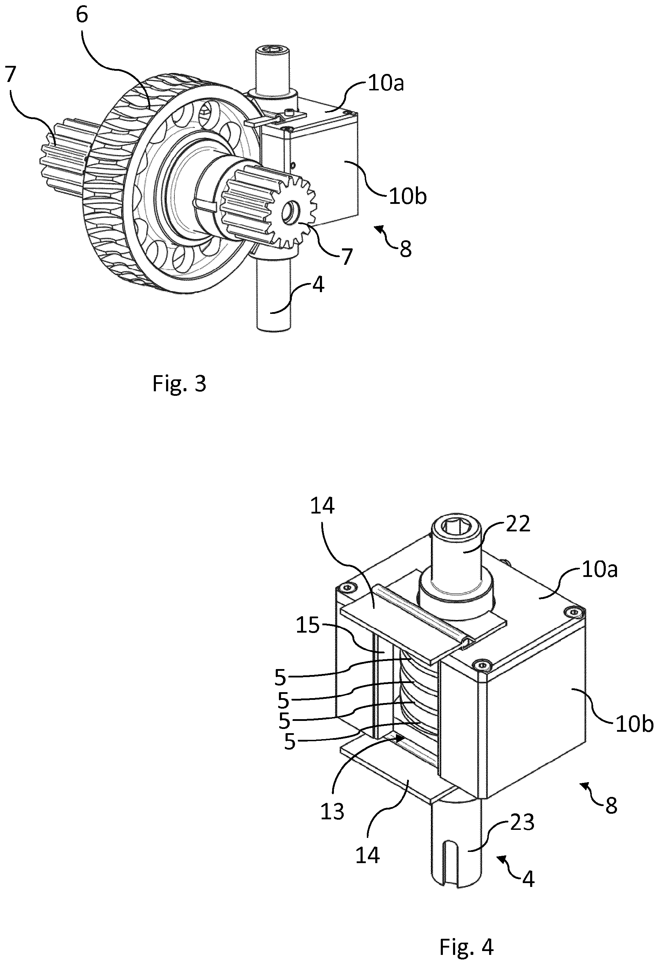

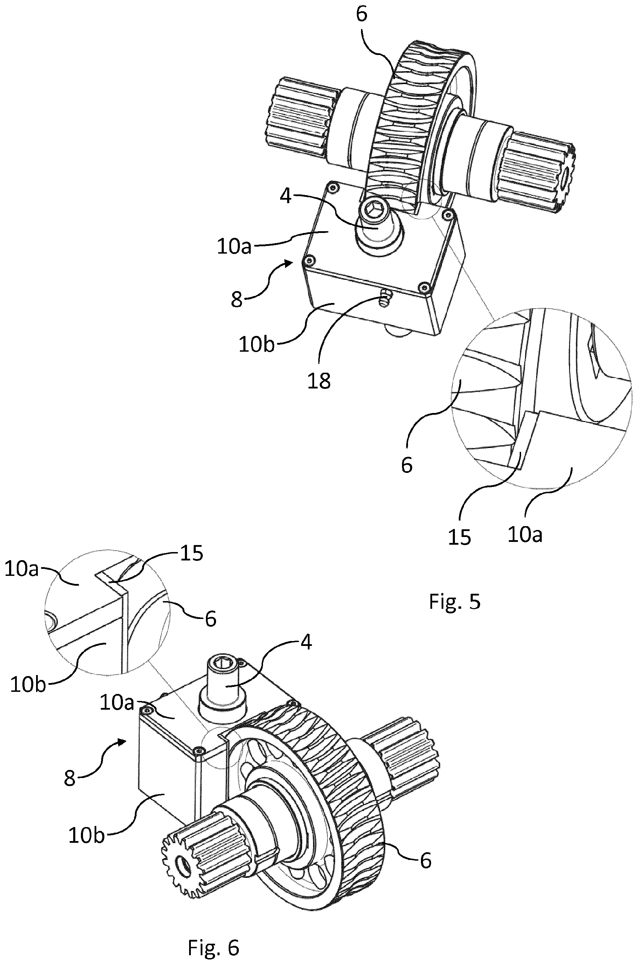

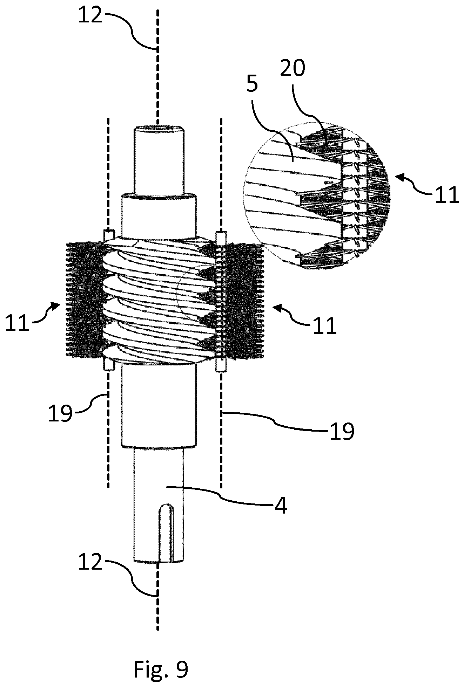

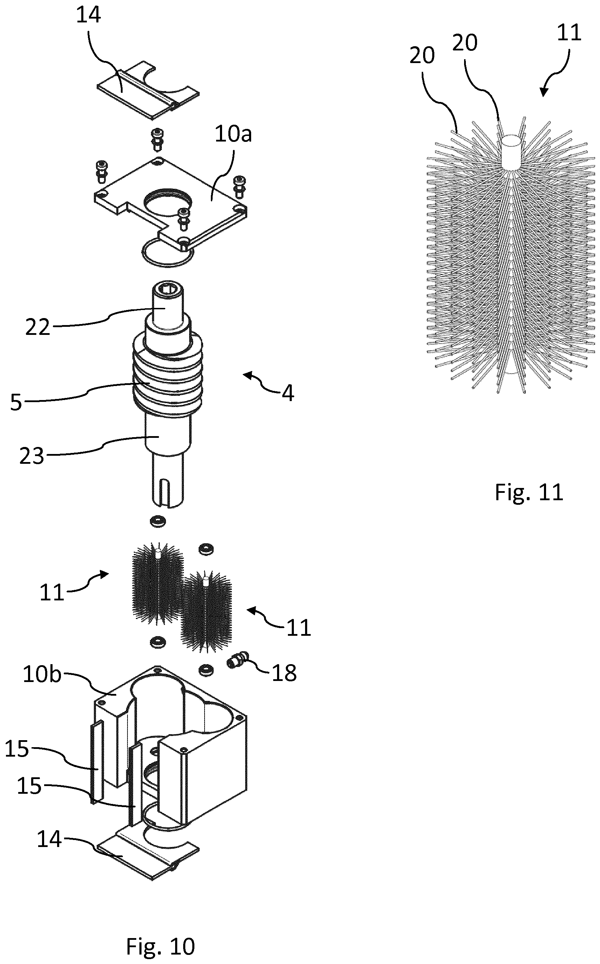

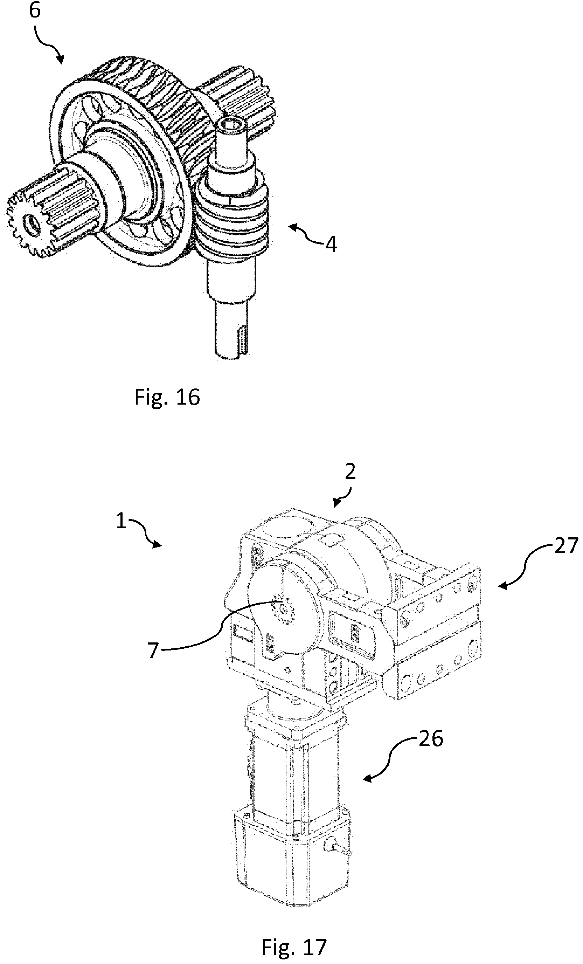

Die Fig. 1 bis 11 zeigen eine erste Ausführungsform einer Vorrichtung 1 zum Schwenken oder Spannen eines Bauteils. Die Vorrichtung 1 weist ein Kopfteil 2 auf, wobei das Kopfteil 2 ein Schneckengetriebe 3 aufweist, wobei das Schneckengetriebe 3 eine antreibbare Schnecke 4 mit mehreren Schraubengängen 5 und ein in den Schraubengängen 5 kämmendes schrägverzahntes Schneckenrad 6 aufweist, wobei das Schneckenrad 6 als Stirnrad ausgebildet ist. Die Anordnung von Schnecke 4 und Schneckenrad 6 zeigt die Fig. 16, wobei in der Fig. 16 lediglich das Schneckenrad 6 und die Schnecke 4 dargestellt sind.

Die Vorrichtung 1 weist ein mit dem Kopfteil 2 verbundendes Antriebsteil 26 auf, wobei es sich bei dem Antriebsteil 26 um ein elektrisches Antriebsteil handelt.

Das Schneckenrad 6 weist eine aus dem Kopfteil 2 herausgeführte Ausgangswelle 7 auf, wobei die Ausgangswelle 7 beidseitig des Kopfteils 2 aus einem Gehäuse 21 des Kopfteils 2 herausgeführt ist. Mit den Enden der Ausgangswelle 7 kann jeweils ein Schwenkelement 27 oder Spannelement drehfest verbunden werden. Eine Vorrichtung 1 mit einem mit der Ausgangswelle 7 verbundenen Schwenkelement 27 ist in der Fig. 17 gezeigt.

Die Vorrichtung 1 weist eine Schmiervorrichtung 8 auf, wobei die Schmiervorrichtung 8 dem Schmieren des Schneckengetriebes 3 mit einem Schmiermittel dient. Die Schmiervorrichtung 8 ist vollständig innerhalb des Kopfteils 2 gelagert. Die Schmiervorrichtung 8 weist ein Gehäuse 10a, 10b auf, wobei das Gehäuse 10a, 10b vorliegend einen ersten Gehäuseabschnitt 10a und einen zweiten Gehäuseabschnitt 10b aufweist, die miteinander verschraubt sind. Das Gehäuse 10a, 10b umschließt eine Kavität 9 der Schmiervorrichtung 8. Die Kavität 9 dient der Aufnahme des Schmiermittels.

Mittels des Antriebsteils 26 ist die Schnecke 4 um eine Drehachse 12 der Schnecke 4 drehbar, wobei durch die Drehung der Schnecke 4 um die Drehachse 12 das mit der Schnecke 4 kämmend zusammenwirkende Schneckenrad 6 entsprechend um eine Drehachse 16 des Schneckenrades 6 drehbar ist. Die Drehachse 16 des Schneckenrades 6 verläuft außerhalb der Drehachse 12 der Schnecke 4 und senkrecht zu der Drehachse 12 der Schnecke 4.

Die Schnecke 4 durchsetzt die Kavität 9 entlang der Drehachse 12 der Schnecke 4, wobei ein erster Abschnitt 22 der Schnecke 4 den ersten Gehäuseabschnitt 10a durchsetzt und ein zweiter Abschnitt 23 der Schnecke 4 den zweiten Gehäuseabschnitt 10b durchsetzt, wobei die Schraubengänge 5 zwischen dem ersten Abschnitt 22 und dem zweiten Abschnitt 23 ausgebildet sind und vollständig in der Kavität 9 angeordnet sind.

Das Gehäuse 10a, 10b weist eine in die Kavität 9 mündende Öffnung 13 auf, wobei ein Kreissegment des Schneckenrades 6 diese Öffnung 13 durchsetzt. Dementsprechend befindet sich der Bereich, in dem das Schneckenrad 6 und die Schnecke 4 kämmend zusammenwirken, innerhalb der Kavität 9 der Schmiervorrichtung 8.

Um ein ungewünschtes Austreten von Schmiermittel aus der Kavität 9 durch die Öffnung 13 zu vermeiden, weist die Schmiervorrichtung 8 im Bereich der Öffnung 13 zwei erste Dichtmittel 14 auf und zwei zweite Dichtmittel 15 auf. Das jeweilige erste Dichtmittel 14 weist ein freies, bewegliches Ende auf, wobei dieses freie Ende das Schneckenrad 6 eine Umfangfläche des Schneckenrades 6 kontaktiert. Das erste Dichtmittel 14 kann beispielsweise Borsten aufweisen, wobei die Borsten das bewegliche Ende bilden. Wie beispielsweise der Fig. 2 zu entnehmen ist, durchsetzt das Schneckenrad 6 das erste Dichtmittel 14, wobei ein Teilbereich des freien Endes durch das Schneckenrad 6 verdrängt wird und dieser Teilbereich die Umfangfläche des Schneckenrades 6 kontaktiert. Das jeweilige zweite Dichtmittel 15 ist streifenförmig ausgebildet und kontaktiert das Schneckenrad 6 in Richtung der Drehachse 16 des Schneckenrads 6. Die von dem jeweiligen zweiten Dichtmittel 15 kontaktierte Fläche des Schneckenrads 6 ist als ebene, geschlossene Kreisringfläche ausgebildet. Dadurch wird eine besonders gute Dichtwirkung des zweiten Dichtmittels 15 bewirkt. Durch die Dichtmittel 14, 15 wird ein unerwünschtes Austreten von Schmiermittel und somit ein Verlust von Schmiermittel vermieden.

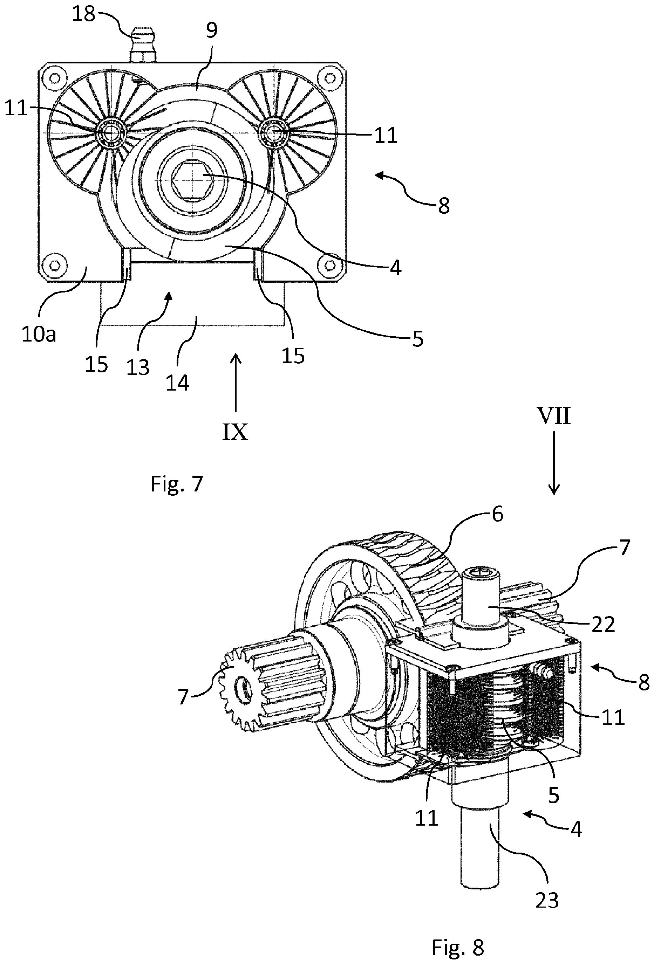

Wie insbesondere den Fig. 7 bis 11 zu entnehmen ist, weist die Schmiervorrichtung 8 zwei Auftragselemente 11 in Form von Bürsten auf. Die jeweilige Bürste weist dabei eine Vielzahl von um eine Drehachse 19 umlaufend angeordneten Borsten 20 auf.

Das Auftragselement 11 ist vollständig innerhalb der Kavität 9 der Schmiervorrichtung 8 angeordnet, wobei ein Teilbereich des Auftragselements 11 die Schraubengänge 5 der Schnecke 4 kontaktiert.

Die Auftragselemente 11 in Form der Bürsten sind jeweils um die Drehachse 19 drehbar in dem Gehäuse 10a, 10b gelagert, sodass beim Betrieb der Vorrichtung 1, konkret bei einem Drehen der Schnecke 4 um die Drehachse 12, welche parallel zu den Drehachsen 19 der Auftragselemente 11 verläuft, aufgrund der Kontaktierung der Auftragselemente 11 mit der Schnecke 4 die Auftragselemente 11 ebenfalls eine Drehbewegung ausführen. Aufgrund der Drehbewegung der Auftragselemente 11 in der Kavität 9 wird das in der Kavität 9 befindliche Schmiermittel in Richtung der Schraubengänge 5 gefördert und im Bereich der Schraubengänge 5 auf die Schnecke 4 aufgetragen.

Die Schmiervorrichtung 8 umfasst einen Stutzen 18, wobei der Stutzen 18 im Bereich einer in die Kavität 9 mündenden Zugangsöffnung 17 angeordnet ist, wobei der Stutzen 18 bzw. die Zugangsöffnung 17 von außen zugänglich ist. Die Zugangsöffnung 17 bzw. der Stutzen 18 ist mittels eines Verschlusses 24 verschließbar, wobei der Verschluss 24 in das Gehäuse 21 des Kopfteils 2 einschraubbar ist und bei Bedarf von dem Gehäuse 21 entfernt werden kann, um Schmiermittel über den Stutzen 18 in die Kavität 9 einzubringen und/oder Schmiermittel aus der Kavität 9 zu entnehmen.

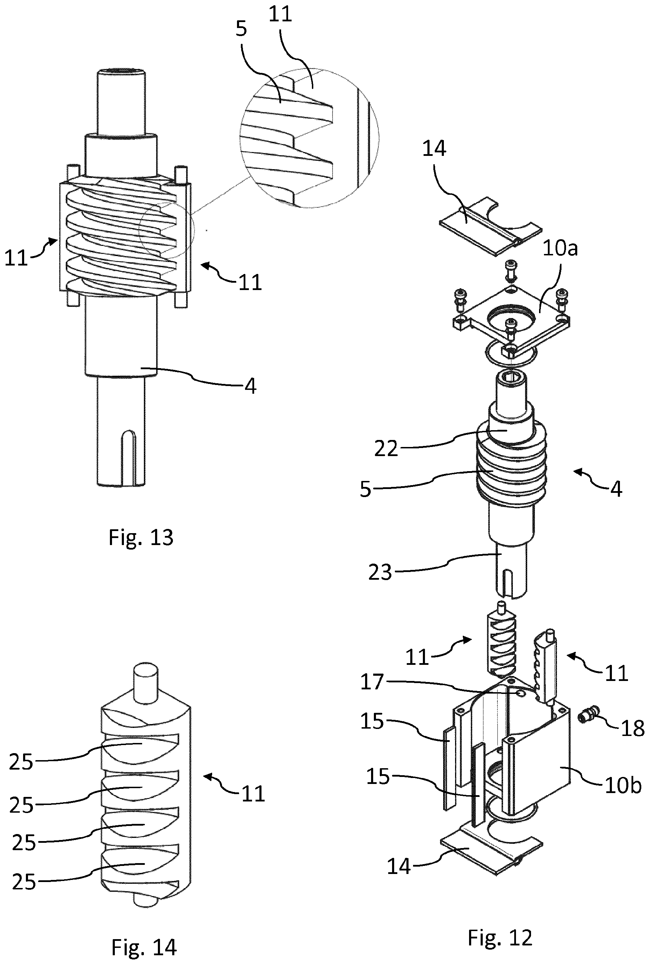

Die Fig. 12 bis 14 zeigen eine alternative Ausführungsform der Vorrichtung 1, wobei sich diese Ausführungsform von der ersten Ausführungsform im Wesentlichen dadurch unterscheidet, dass die Auftragselemente 11 nicht als Bürsten ausgebildet sind, sondern jeweils eine geschlossene Struktur aufweisen, wobei die Struktur mit Schlitzungen 25 versehen ist, wobei die jeweilige Schlitzung 25 einen Teilbereich der Schraubengänge 5 vollflächig kontaktiert. Das Auftragselement 11 besteht in dem Bereich des Auftragselements 11, der die Schraubengänge 5 kontaktiert, aus einem Material, das dazu geeignet ist, das Schmiermittel aufzunehmen. Bei dem Material kann es sich beispielsweise um Filz handeln.

Die Auftragselemente 11 der zweiten Ausführungsform sind dabei drehfest in dem Gehäuse 10a, 10b der Schmiervorrichtung 8 gelagert.

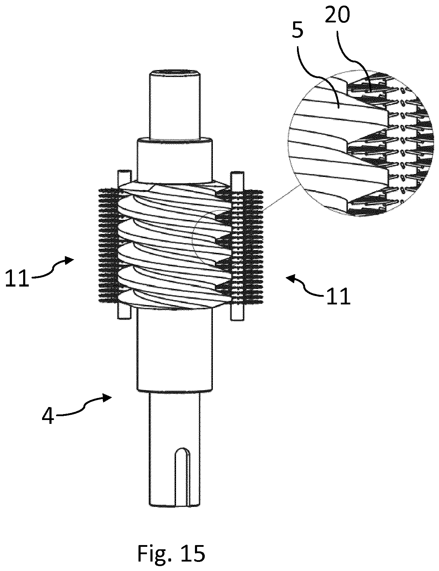

Die Fig. 15 zeigt eine weitere Ausführungsform der Vorrichtung 1, wobei bei dieser Ausführungsform die Auftragselemente 11 wiederum als Bürsten ausgebildet sind, wobei im Gegensatz zu dem ersten Ausführungsbeispiel der Vorrichtung 1 die Borsten 20 eine geringere Länge aufweisen.

### Bezugszeichenliste

- 1: Vorrichtung
- 2: Kopfteil
- 3: Schneckengetriebe
- 4: Schnecke
- 5: Schraubengang
- 6: Schneckenrad
- 7: Ausgangswelle
- 8: Schmiervorrichtung
- 9: Kavität
- 10a: erster Gehäuseabschnitt
- 10b: zweiter Gehäuseabschnitt
- 11: Auftragselement
- 12: Drehachse
- 13: Öffnung
- 14: erstes Dichtmittel
- 15: zweites Dichtmittel
- 16: Drehachse
- 17: Einfüllöffnung
- 18: Stutzen
- 19: Drehachse
- 20: Borste
- 21: Gehäuse
- 22: erster Abschnitt
- 23: zweiter Abschnitt
- 24: Verschluss
- 25: Schlitzung
- 26: Antriebsteil
- 27: Schwenkelement

## Patentansprüche

1. Vorrichtung (1) zum Schwenken oder Spannen eines Bauteils, wobei die Vorrichtung (1) ein Kopfteil (2) aufweist, wobei das Kopfteil (2) ein Schneckengetriebe (3) aufweist, wobei das Schneckengetriebe (3) eine antreibbare Schnecke (4) mit mindestens einem Schraubengang (5) und ein darin kämmendes Schneckenrad (6) aufweist, wobei mittels des Schneckenrads (6) eine aus dem Kopfteil (2) herausgeführte Ausgangswelle (7) antreibbar ist, wobei die Ausgangswelle (7) drehfest mit mindestens einem Schwenkelement oder Spannelement verbindbar ist, wobei die Vorrichtung (1) eine Schmiervorrichtung (8) aufweist, zum Schmieren des Schneckengetriebes (3) mit einem Schmiermittel, wobei die Schmiervorrichtung (8) in dem Kopfteil (2) gelagert ist, wobei die Schmiervorrichtung (8) ein eine Kavität (9) umschließendes Gehäuse (10a, 10b) aufweist, wobei die Kavität (9) der Aufnahme des Schmiermittels dient, wobei die Schmiervorrichtung (8) zumindest ein Auftragselement (11) aufweist, wobei zumindest ein Teilbereich des Auftragselements (11) in der Kavität (9) angeordnet ist und wobei das Auftragselement (11) den mindestens einen Schraubengang (5) kontaktiert, wobei das Gehäuse (10a, 10b) eine in die Kavität mündende Öffnung (13) aufweist, **dadurch gekennzeichnet, dass** ein Segment des Schneckenrads (6) diese Öffnung (13) durchsetzt, und dass die Schmiervorrichtung (8) ein im Bereich der Öffnung (13) angeordnetes Dichtmittel (14, 15) aufweist, wobei die Schmiervorrichtung (8) ein im Bereich der Öffnung (13) angeordnetes erstes Dichtmittel (14) aufweist, wobei das erste Dichtmittel (14) das Schneckenrad (6) an einer Umfangfläche des Schneckenrades (6) kontaktiert und/oder die Schmiervorrichtung (8) ein im Bereich der Öffnung (13) angeordnetes zweites Dichtmittel (15) aufweist, wobei das zweite Dichtmittel (15) das Schneckenrad (6) in Richtung einer Drehachse (16) des Schneckenrades (6) kontaktiert.

2. Vorrichtung (1) nach Anspruch 1, **dadurch gekennzeichnet, dass** zumindest ein Teilbereich des mindestens einem Schraubengangs (5) in der Kavität (9) angeordnet ist.

3. Vorrichtung (1) nach Anspruch 1 oder 2, **dadurch gekennzeichnet, dass** die Schnecke (4) die Kavität (9) entlang einer Drehachse (12) der Schnecke (4) durchsetzt.

4. Vorrichtung (1) nach Anspruch 3, **dadurch gekennzeichnet, dass** die Schnecke (4) die Kavität (9) und das Gehäuse (10a, 10b) entlang der Drehachse (12) der Schnecke (4) durchsetzt.

5. Vorrichtung (1) nach einem der Ansprüche 1 bis 4, **dadurch gekennzeichnet, dass** das Gehäuse (10a, 10b) eine von außen zugängliche, in die Kavität (9) mündende Zugangsöffnung (17) zum Einbringen des Schmiermittels in die Kavität (9) und/oder zum Entnehmen des Schmiermittels aus der Kavität (9) aufweist.

6. Vorrichtung (1) nach Anspruch 5, wobei die Zugangsöffnung (17) mittels eines Verschlusses (24) verschließbar ist.

7. Vorrichtung (1) nach einem der Ansprüche 1 bis 6, **dadurch gekennzeichnet, dass** das Auftragselement (11) Borsten (20) aufweist, wobei die Borsten (20) den mindestens einen Schraubengang (5) kontaktieren, insbesondere das Auftragselement (11) als Bürste ausgebildet ist.

8. Vorrichtung (1) nach einem der Ansprüche 1 bis 7, **dadurch gekennzeichnet, dass** ein Bereich des Auftragselements (11), der den mindestens einen Schraubengang (5) kontaktiert, aus einem Material besteht, das dazu geeignet ist, das Schmiermittel aufzunehmen.

9. Vorrichtung (1) nach Anspruch 8, **dadurch gekennzeichnet, dass** es sich bei dem Material um Filz handelt.

10. Vorrichtung nach Anspruch 8 oder 9, wobei das Auftragselement (11) eine Schlitzung (25) aufweist, wobei das Auftragselements (11) im Bereich der Schlitzung den mindestens einen Schraubengang (5) kontaktiert.

11. Vorrichtung (1) nach einem der Ansprüche 1 bis 10, **dadurch gekennzeichnet, dass** das Auftragselement (11) um eine Drehachse (19) drehbar gelagert ist.

12. Vorrichtung (1) nach einem der Ansprüche 1 bis 11, **dadurch gekennzeichnet, dass** das Auftragselement (11) drehfest gelagert ist.

13. Vorrichtung (1) nach einem der Ansprüche 1 bis 12, **dadurch gekennzeichnet, dass** das Gehäuse (10a, 10b) einen ersten Gehäuseabschnitt (10a) und zweiten Gehäuseabschnitt (10b) aufweist, wobei der erste Gehäuseabschnitt (10a) und der zweite Gehäuseabschnitt (10b) lösbar miteinander verbindbar sind, wobei ein erster Abschnitt (22) der Schnecke (4) den ersten Gehäuseabschnitt (10a) durchsetzt und ein zweiter Abschnitt (23) der Schnecke (4) den zweiten Gehäuseabschnitt (10b) durchsetzt, wobei der mindestens eine Schraubengang (5) zwischen dem ersten Abschnitt (22) und dem zweiten Abschnitt (23) der Schnecke (4) ausgebildet ist.

## Claims

1. Apparatus (1) for pivoting or clamping a component, wherein the apparatus (1) has a head part (2), wherein the head part (2) has a worm drive (3), wherein the worm drive (3) has a drivable worm (4) with at least one screw thread (5) and a worm wheel (6) meshing therewith, wherein, by means of the worm wheel (6), an output shaft (7) that passes out of the head part (2) is able to be driven, wherein the output shaft (7) is able to be connected to at least one pivoting element or clamping element for conjoint rotation, wherein the apparatus (1) has a lubricating apparatus (8) for lubricating the worm drive (3) with a lubricant, wherein the lubricating apparatus (8) is mounted in the head part (2), wherein the lubricating apparatus (8) has a housing (10a, 10b) enclosing a cavity (9), wherein the cavity (9) serves to hold the lubricant, wherein the lubricating apparatus (8) has at least one application element (11), wherein at least a subregion of the application element (11) is arranged in the cavity (9) and wherein the application element (11) comes into contact with the at least one screw thread (5), wherein the housing (10a, 10b) has an opening (13) that leads into the cavity, **characterized in that** a segment of the worm wheel (6) passes through this opening (13), and **in that** the lubricating apparatus (8) has a sealing means (14, 15) arranged in the region of the opening (13), wherein the lubricating apparatus (8) has a first sealing means (14) arranged in the region of the opening (13), wherein the first sealing means (14) comes into contact with the worm wheel (6) at a circumferential surface of the worm wheel (6) and/or the lubricating apparatus (8) has a second sealing means (15) arranged in the region of the opening (13), wherein the second sealing means (15) comes into contact with the worm wheel (6) in the direction of an axis of rotation (16) of the worm wheel (6).

2. Apparatus (1) according to Claim 1, **characterized in that** at least a subregion of the at least one screw thread (5) is arranged in the cavity (9).

3. Apparatus (1) according to Claim 1 or 2, **characterized in that** the worm (4) passes through the cavity (9) along an axis of rotation (12) of the worm (4).

4. Apparatus (1) according to Claim 3, **characterized in that** the worm (4) passes through the cavity (9) and the housing (10a, 10b) along the axis of rotation (12) of the worm (4).

5. Apparatus (1) according to one of Claims 1 to 4, **characterized in that** the housing (10a, 10b) has an externally accessible access opening (17), leading into the cavity (9), for introducing the lubricant into the cavity (9) and/or for taking the lubricant from the cavity (9).

6. Apparatus (1) according to Claim 5, wherein the access opening (17) is closable by means of a closure (24).

7. Apparatus (1) according to one of Claims 1 to 6, **characterized in that** the application element (11) has bristles (20), wherein the bristles (20) come into contact with the at least one screw thread (5), and in particular the application element (11) is in the form of a brush.

8. Apparatus (1) according to one of Claims 1 to 7, **characterized in that** a region of the application element (11) that comes into contact with the at least one screw thread (5) consists of a material that is suitable for taking up the lubricant.

9. Apparatus (1) according to Claim 8, **characterized in that** the material is felt.

10. Apparatus according to Claim 8 or 9, wherein the application element (11) has slots (25), wherein the application (11) comes into contact with the at least one screw thread (5) in the region of the slots.

11. Apparatus (1) according to one of Claims 1 to 10, **characterized in that** the application element (11) is mounted so as to be rotatable about an axis of rotation (19).

12. Apparatus (1) according to one of Claims 1 to 11, **characterized in that** the application element (11) is mounted so as to be rotationally fixed.

13. Apparatus (1) according to one of Claims 1 to 12, **characterized in that** the housing (10a, 10b) has a first housing portion (10a) and a second housing portion (10b), wherein the first housing portion (10a) and the second housing portion (10b) are able to be connected releasably together, wherein a first portion (22) of the worm (4) passes through the first housing portion (10a) and a second portion (23) of the worm (4) passes through the second housing portion (10b), wherein the at least one screw thread (5) is formed between the first portion (22) and the second portion (23) of the worm (4).

## Revendications

1. Dispositif (1) de pivotement ou de serrage d'un composant, le dispositif (1) comportant une partie de tête (2), la partie de tête (2) comportant une transmission à vis sans fin (3), la transmission à vis sans fin (3) comportant une vis sans fin entraînable (4), pourvue d'au moins un filet de vis (5), et une roue tangente (6) s'engrenant dans celle-ci, un arbre de sortie (7), qui sort de la partie de tête (2), pouvant être entraîné au moyen de la roue tangente (6), l'arbre de sortie (7) pouvant être relié solidairement en rotation à au moins un élément pivotant ou un élément tendeur, le dispositif (1) comportant un dispositif de lubrification (8) destiné à lubrifier la transmission à vis sans fin (3) avec un lubrifiant, le dispositif de lubrification (8) étant logé dans la partie de tête (2), le dispositif de lubrification (8) comportant un boîtier (10a, 10b) qui renferme une cavité (9), la cavité (9) servant à recevoir le lubrifiant, le dispositif de lubrification (8) comportant au moins un élément d'application (11), au moins une zone de l'élément d'application (11) étant disposée dans la cavité (9) et l'élément d'application (11) venant en contact avec l'au moins un filet de vis (5), le boîtier (10a, 10b) comportant une ouverture (13) qui débouche dans la cavité, **caractérisé en ce qu'**un segment de la roue tangente (6) passe par cette ouverture (13) et **en ce que** le dispositif de lubrification (8) comporte un moyen d'étanchéité (14, 15) disposé dans la région de l'ouverture (13), le dispositif de lubrification (8) comportant un premier moyen d'étanchéité (14) disposé dans la région de l'ouverture (13), le premier moyen d'étanchéité (14) venant en contact avec la roue tangente (6) sur une surface périphérique de la roue tangente (6) et/ou le dispositif de lubrification (8) comportant un deuxième moyen d'étanchéité (15) disposé dans la région de l'ouverture (13), le deuxième moyen d'étanchéité (15) venant en contact avec la roue tangente (6) dans la direction d'un axe de rotation (16) de la roue tangente (6) .

2. Dispositif (1) selon la revendication 1, **caractérisé en ce qu'**au moins une zone de l'au moins un filet de vis (5) est disposée dans la cavité (9).

3. Dispositif (1) selon la revendication 1 ou 2, **caractérisé en ce que** la vis sans fin (4) passe par la cavité (9) suivant un axe de rotation (12) de la vis sans fin (4).

4. Dispositif (1) selon la revendication 3, **caractérisé en ce que** la vis sans fin (4) passe par la cavité (9) et le boîtier (10a, 10b) suivant l'axe de rotation (12) de la vis sans fin (4).

5. Dispositif (1) selon l'une des revendications 1 à 4, **caractérisé en ce que** le boîtier (10a, 10b) comporte une ouverture d'accès (17) accessible de l'extérieur, débouchant dans la cavité (9) et destinée à introduire le lubrifiant dans la cavité (9) et/ou à retirer le lubrifiant de la cavité (9).

6. Dispositif (1) selon la revendication 5, l'ouverture d'accès (17) pouvant être fermée au moyen d'une fermeture (24).

7. Dispositif (1) selon l'une des revendications 1 à 6, **caractérisé en ce que** l'élément d'application (11) comporte des poils (20), les poils (20) venant en contact avec l'au moins un filet de vis (5), en particulier l'élément d'application (11) étant réalisé sous la forme d'une brosse.

8. Dispositif (1) selon l'une des revendications 1 à 7, **caractérisé en ce qu'**une zone de l'élément d'application (11) qui vient en contact avec l'au moins un filet de vis (5) est en une matière apte à absorber le lubrifiant.

9. Dispositif (1) selon la revendication 8, **caractérisé en ce que** la matière est du feutre.

10. Dispositif selon la revendication 8 ou 9, l'élément d'application (11) comportant une fente (25), l'élément d'application (11) venant en contact avec l'au moins un filet de vis (5) dans la région de la fente.

11. Dispositif (1) selon l'une des revendications 1 à 10, **caractérisé en ce que** l'élément d'application (11) est monté de manière rotative sur un axe de rotation (19) .

12. Dispositif (1) selon l'une des revendications 1 à 11, **caractérisé en ce que** l'élément d'application (11) est monté de manière rotative.

13. Dispositif (1) selon l'une des revendications 1 à 12, **caractérisé en ce que** le boîtier (10a, 10b) comporte une première portion de boîtier (10a) et une deuxième portion de boîtier (10b), la première portion de boîtier (10a) et la deuxième portion de boîtier (10b) pouvant être reliées l'une à l'autre de manière amovible, une première portion (22) de la vis sans fin (4) passant par la première portion de boîtier (10a) et une deuxième portion (23) de la vis sans fin (4) passant par la deuxième portion de boîtier (10b), l'au moins un filet de vis (5) étant formé entre la première portion (22) et la deuxième portion (23) de la vis sans fin (4).
